# EUROPEAN PATENT APPLICATION

(11) **EP 4 663 944 A1**
(43) Date of publication of application: **17.12.2025**
(21) Application number: 24181877.2
(22) Date of filing: 13.06.2024
(51) Int. Cl.: F03D 80/00, F16B 5/02

(54) **COUPLING ASSEMBLY**

(71) Applicant: Siemens Gamesa Renewable Energy A/S, 7330 Brande (DK)
(72) Inventor: Pedersen, Lars, 7190 Billund (DK); Yong, Xiaocen, 7500 Holstebro (DK)
(74) Representative: SGRE-Association

(57) **Abstract**

The invention relates to a coupling assembly (1) for a wind turbine comprising a first coupling part (2), a second coupling part (3), fastening means (4), a first washer (10) and a second washer (11). The first coupling part (2) and the second coupling part (3) both comprise an insertion hole (5). The fastening means (4) is inserted in the insertion hole (5) of the first coupling part (2) and the second coupling part (3) for coupling the first coupling part (2) to the second coupling part (3). The fastening means (4) comprises a first end (20) and a second end (21). The first washer (10) and the second washer (11) are both arranged between the first end (20) and the first coupling part (2). The first washer (10) comprises a main body (13) and a groove (14). The second washer (11) is at least partially inserted in the groove (14) of the first washer (10).

## Description

The present invention relates to a coupling assembly of a wind turbine. The present invention further relates to a method of coupling a first coupling part and a second coupling part of a coupling assembly of a wind turbine.

Wind turbines are increasingly used for the generation of electrical energy. A wind turbine typically comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor and rotates the shaft, thereby driving the generator to generate electricity.

In wind turbines, coupling assemblies comprising bolt connections are used to connect structural parts such as the canopy or the tower. These coupling assemblies are used at flanges or directly on steel or glass fibre parts to couple these parts to each other. These coupling assemblies typically include a bolt with a hex head and a helical shaft that is inserted into two corresponding holes in the first coupling part, e.g. a cover element, and in the second coupling part, e.g. the mounting structure. The first coupling part and the second coupling part are arranged in such a way that the holes are aligned for inserting the bolt in both holes subsequently. The nut is screwed and fastened to the threaded shaft of the bolt. For the canopy or the hub, typically the bolt head is on the outside of the nacelle or hub, and the nut is on the inside.

Wind turbines are subjected to harsh environmental conditions, especially rain. Water must be prevented from entering the nacelle or hub. Therefore, it is advantageous to arrange at least one washer in the coupling assembly for sealing it. The washer abuts a surface of the coupling part between the coupling part and the bolt head or between the coupling part and the nut, creating a tight connection and preventing any water or moisture from entering the coupling assembly. The sealing washer is pressed tightly against the coupling part's surface when the bolted connection is tightened by a screw tightening the gap between the seal shaft and the hole of the coupling part. Such washers are known from EP 3591220 A1, US 2020072184 A1 and DE 19702838 A1.

In the case where the fastener is a bolt and the bolt includes a hexagonal head, a washer having a larger diameter than the hexagonal head is provided between the hexagonal head and the sealing washer. This washer is used to distribute the pressure of the hex head over a larger area on the sealing washer after tightening the nut, so that the sealing washer is evenly pressed against the facing element.

Where the bolt includes a dome head, such an additional washer is not needed because the bolt head generally has a larger diameter due to its round shape, that is, a correspondingly larger surface pressed against the sealing washer, making the seal. A washer may be arranged between the dome head and the coupling part of the coupling assembly.

Other washers made of plastic are known to secure bolt connections. However, such washers lack the resilience to withstand the torque and thus easily break due to the material's weakness.

However, such washers known in the art do not effectively seal coupling assemblies in such a way that water or humidity introduction is prevented throughout the lifetime of the wind turbine.

It is therefore an object of the invention to provide a coupling assembly with an effective sealing capability.

This is achieved by a coupling assembly according to claim 1 and by a method of coupling a first coupling part and a second coupling part according to claim 12.

According to the invention, a coupling assembly for a wind turbine comprises a first coupling part, a second coupling part, fastening means, a first washer and a second washer. The first coupling part and the second coupling part both comprise an insertion hole. The fastening means is inserted in the insertion hole of the first coupling part and the second coupling part for coupling the first coupling part to the second coupling part. The fastening means comprises a first end and a second end. The first washer and the second washer are both arranged between the first end and the first coupling part. The first washer comprises a main body and a groove. The second washer is at least partially inserted in the groove of the first washer.

The groove ensures that, upon tightening the fastening means, the second washer is compressed, thereby effectively sealing the gap between the fastening means and the coupling part. In addition, the first washer shields the second washer from direct exposure to the external environment, including UV rays, salt and moisture.

According to a preferred embodiment of the invention, the coupling assembly further comprises a third washer. The third washer is arranged between the second end and the second coupling part. This third washer seals the coupling assembly from the opposite site of the first and second washers, thereby improving the sealing capabilities and further preventing the insertion of humidity into the coupling assembly.

According to another preferred embodiment of the invention, the first washer comprises an integrated spring within the washer extending at least partially in a radial direction.

According to another preferred embodiment of the invention, the second washer comprises an integrated spring within the washer extending at least partially in a radial direction. According to another preferred embodiment of the invention, the third washer comprises an integrated spring within the washer extending at least partially in a radial direction.

An integrated spring increases the contact pressure between the washer and the surface on which the washer is placed, thereby improving the sealing capability. The spring ensures contact between the seal and the surface and compensates for deflections. For example, a garter spring may be provided.

According to another preferred embodiment of the invention, the spring is made of steel.

According to another preferred embodiment of the invention, the fastening means comprises a bolt and a nut.

According to another preferred embodiment of the invention, the bolt comprises a bolt head at the first end and a thread at the second end. The nut is tightened at the thread. By tightening the nut at the thread, the contact pressure of the washers is increased, thereby efficiently sealing the coupling assembly.

According to another preferred embodiment of the invention, the bolt comprises a bolt head at the second end and a thread at the first end. The nut is tightened at the thread.

According to another preferred embodiment of the invention, the first washer and the second washer are wedge-locking washers. As such, the combination of the friction fit between the knurled surface and the bore component together with the preload provided by the torqued nut component and the wedge-locking washer contributes to improved joint reliability.

According to another preferred embodiment of the invention, the first washer is made of silicon. Silicon is a cheap material with good sealing capabilities.

According to another preferred embodiment of the invention, the second washer is made of silicon.

According to another preferred embodiment of the invention, the third washer is made of silicon.

According to another preferred embodiment of the invention, the first washer comprises a chamfer at the outer surface. The chamfer can be incorporated along an edge of the first washer. Combined with a round head bolt, it effectively prevents the risk of trapping hazards and thereby shields the coupling assembly from exposure to the external environment.

Yet another aspect of the invention relates to a nacelle comprising a plurality of panels, wherein the panels are coupled by the coupling assemblies.

Yet another aspect of the invention relates to a method of coupling a first coupling part and a second coupling part of a coupling assembly of a wind turbine. The method comprises the steps of
- joining and aligning the insertion holes of the first coupling part and the second coupling part,
- inserting the second washer at least partially in the groove of the first washer,
- placing the second washer and the first washer on the insertion hole of the first coupling part, and
- inserting the fastening means through the first washer and the second washer and in the insertion hole of the first coupling part and the second coupling part for coupling the first coupling part to the second coupling part.

According to a preferred embodiment of the invention, the fastening means comprises a bolt and a nut, wherein the bolt comprises a bolt head at the first end and a thread at the second end. The method further comprises the step of tightening the nut on the thread after inserting the fastening means.

In order to facilitate the understanding of the characteristics of the invention and being an integral part of this specification, some drawing sheets are attached on which figures, with an illustrative but not limiting character, the following is represented:
Figure 1 shows a bolt as a fastening means.
Figures 2 and 3 show a first washer according to the invention.
Figure 4 discloses a coupling assembly according to an embodiment of the invention comprising a bolt and a nut.
Figure 5 discloses a coupling assembly according to another embodiment of the invention comprising a spring within the first washer.

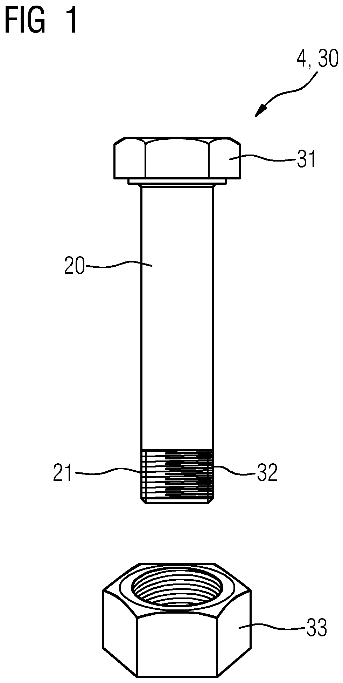

Figure 1 shows a bolt 30 and a nut 33 as a fastening means 4. The bolt 30 comprises a first end 20 and a second end 21. The bolt 30 comprises a bolt head 31 at the first end 20 and a thread 32 at the second end 21. The nut 33 is configured to be tightened at the thread 32 of the bolt 30 by having a corresponding thread 32 at its inner side.

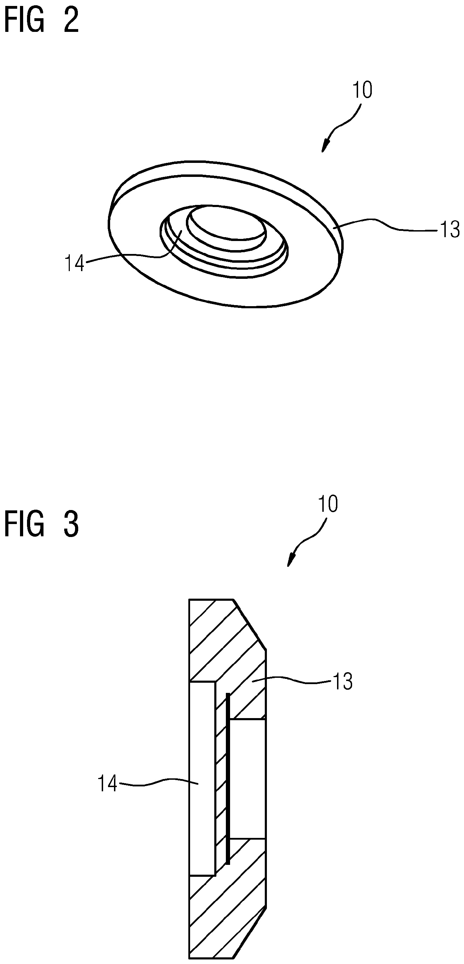

Figures 2 and 3 show a first washer 10 according to the invention from two different perspectives. The first washer 20 comprises a main body 13 and a groove 14. The groove 14 is machined in such a way that a second washer 11 can be at least partially inserted in the groove 14.

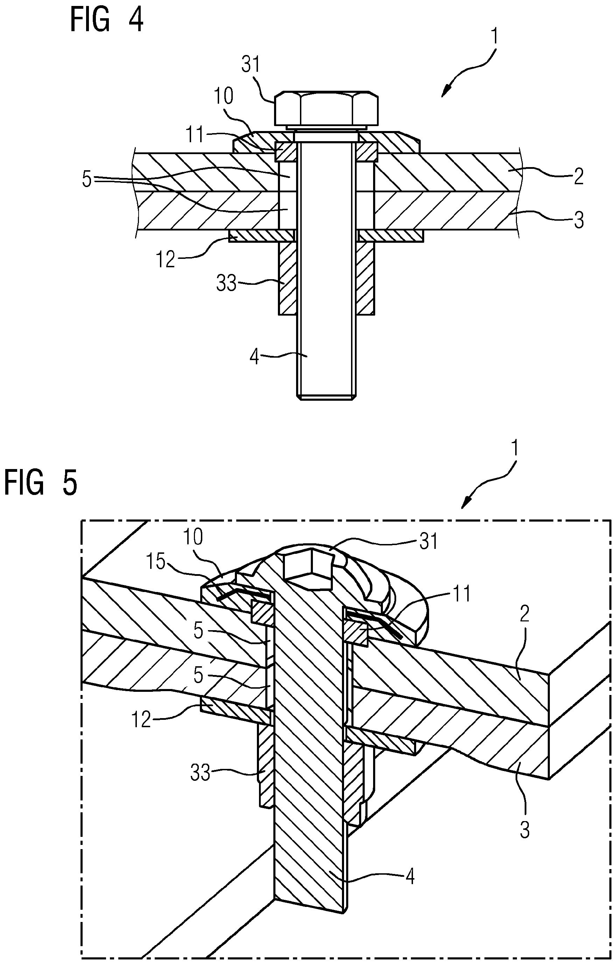

Figure 4 discloses a coupling assembly 1 according to an embodiment of the invention comprising a first coupling part 2, a second coupling part 3, fastening means 4, a first washer 10, a second washer 11 and a third washer 12. The fastening means 4 comprises a bolt 30 inserted in the insertion hole 5 of the first and second coupling parts 2,3 and a nut 33. The fastening means 4 is configured to tighten the first coupling part 2 to the second coupling part 3. The first washer 10 is the same as the one shown in Figures 2 and 3, having a main body 13 and a groove 14. The second washer 11 is partially inserted in the first washer 10. Both the first and second washers 10, 11 are arranged between the bolt head 31 and the first coupling part 2. The third washer 12 is arranged between the second coupling part 3 and the nut 33. The first washer 11 further comprises a chamfer at the outer surface.

Figure 5 discloses a coupling assembly 1 according to another embodiment of the invention comprising an integrated spring 15 within the first washer 10 extending at least partially in a radial direction. The rest of the features in Figure 5 are as shown in Figure 4.

### Reference numbers

- 1: Coupling assembly
- 2: First coupling part
- 3: Second coupling part
- 4: Fastening means

- 10: First washer
- 11: Second washer
- 12: Third washer
- 13: Main body
- 14: Groove
- 15: Spring

- 20: First end
- 21: Second end

- 30: Bolt
- 31: Bolt head
- 32: Thread
- 33: Nut

## Claims

1. A coupling assembly (1) for a wind turbine comprising
a first coupling part (2), a second coupling part (3), fastening means (4), a first washer (10) and a second washer (11),
wherein the first coupling part (2) and the second coupling part (3) both comprise an insertion hole (5),
wherein the fastening means (4) is inserted in the insertion hole (5) of the first coupling part (2) and the second coupling part (3) for coupling the first coupling part (2) to the second coupling part (3),
wherein the fastening means (4) comprises a first end (20) and a second end (21),
wherein the first washer (10) and the second washer (11) are both arranged between the first end (20) and the first coupling part (2),
**characterized in that** the first washer (10) comprises a main body (13) and a groove (14),
wherein the second washer (11) is at least partially inserted in the groove (14) of the first washer (10).

2. The coupling assembly (1) according to claim 1, wherein the coupling assembly (1) further comprises a third washer (12), wherein the third washer (12) is arranged between the second end (21) and the second coupling part (3).

3. The coupling assembly (1) according to claim 2, wherein the third washer (12) comprises an integrated spring (15) within the washer (12) extending at least partially in a radial direction.

4. The coupling assembly (1) according to any of the preceding claims, wherein the first washer (10) and/or the second washer (11) comprises an integrated spring (15) within the washer (10, 11) extending at least partially in a radial direction.

5. The coupling assembly (1) according to claim 3 or 4, wherein the spring (15) is made of steel.

6. The coupling assembly (1) according to any of the preceding claims, wherein the fastening means (4) comprises a bolt (30) and a nut (33).

7. The coupling assembly (1) according to claim 6, wherein the bolt (30) comprises a bolt head (31) at the first end (20) and a thread (32) at the second end (21), wherein the nut (33) is tightened at the thread (32).

8. The coupling assembly (1) according to claim 6, wherein the bolt (30) comprises a bolt head (31) at the second end (21) and a thread (32) at the first end (20), wherein the nut (33) is tightened at the thread (32).

9. The coupling assembly (1) according to any of the preceding claims, wherein the first washer (10) and the second washer (11) are wedge-locking washers.

10. The coupling assembly (1) according to any of the preceding claims, wherein the first washer (10) and/or the second washer (11) is made of silicon.

11. The coupling assembly (1) according to any of the preceding claims, wherein the first washer (10) comprises a chamfer at the outer surface.

12. A method of coupling a first coupling part (2) and a second coupling part (3) of a coupling assembly (1) of a wind turbine according to any of the claims 1 to 11, comprising the steps of
- joining and aligning the insertion holes (5) of the first coupling part (2) and the second coupling part (3),
- inserting the second washer (11) at least partially in the groove (14) of the first washer (10),
- placing the second washer (11) and the first washer (10) on the insertion hole (5) of the first coupling part (2), and
- inserting the fastening means (4) through the first washer (10) and the second washer (11) and in the insertion hole (5) of the first coupling part (2) and the second coupling part (3) for coupling the first coupling part (2) to the second coupling part (3).

13. The method according to claim 12, wherein the fastening means (4) comprises a bolt (30) and a nut (33), wherein the bolt (30) comprises a bolt head (31) at the first end (20) a thread (32) at the second end (21), the method further comprising the step of tightening the nut (33) on the thread (32) after inserting the fastening means (4).
